# EUROPÄISCHE PATENTANMELDUNG

(11) **EP 2 130 894 A2**
(43) Veröffentlichungstag der Anmeldung: **09.12.2009**
(21) Anmeldenummer: 09007367.7
(22) Anmeldetag: 04.06.2009
(51) Int. Cl.: C10G 2/00, C01B 3/04, C07C 1/04, C07C 1/12, C07C 29/151, C25B 1/04

(54) **Verwendung von Kohlenstoffoxid aus Verbrennungsabgasen und solar erzeugtem Wasserstoff zur Herstellung flüssiger Brennstoffe**

(30) Priorität: 07.06.2008 DE 102008027311
(71) Anmelder: DEUTZ Aktiengesellschaft, 51149 Köln (DE)
(72) Erfinder: Knuth, Hans-Walter, Dr., 51145 Köln (DE); Miebach, Rolf, 50321 Brühl (DE)

(57) **Zusammenfassung**

1. Verwendung von Kohlenstoffdioxid aus Verbrennungsabgasen und solar erzeugtem Wasserstoff zur Herstellung flüssiger Brennstoffe
2.1 Die Erfindung betrifft ein Verfahren zur Herstellung von Brennstoffen aus solar erzeugtem Wasserstoff, wobei die solare Erzeugung an einem Ort intensiver Sonnenstrahlung erfolgt.
2.2 Erfindungsgemäß wird ein Verfahren zur Herstellung von Brennstoffen aus solar erzeugtem Wasserstoff angegeben, das gegenüber bekannten Verfahren verbessert ist. Dies wird dadurch erreicht, dass von dem Ort der solaren Erzeugung eine chemische Umwandlung des Wasserstoffs mit Kohlendioxid in ein Zwischenprodukt zur Herstellung eines Brennstoffs oder in ein Endprodukt eines Brennstoffs erfolgt.

## Beschreibung

Die Erfindung betrifft ein Verfahren zur Herstellung von Brennstoffen aus solar erzeugtem Wasserstoff, wobei die solare Erzeugung an einem Ort intensiver Sonnenstrahlung erfolgt.

Ein derartiges Verfahren ist aus der DE 694 32 821 T2 bekannt. Dabei beschäftigt sich dieses Dokument insbesondere mit der Ausgestaltung eines parabolischen Kollektors zur Bündelung von Solarenergie, der einen Empfänger in seinen Brennpunkt einschließt, und in einer Art und Weise befestigt ist, die seine freie Bewegung in mindestens zwei Richtungen gestattet. Zur Nutzung des vorzugsweise in einer Wüste erzeugten Stroms ist lediglich angegeben, dass der wesentliche Teil des Stroms einem Stromnetz zugeführt wird oder zur Erzeugung von Wasserstoff eingesetzt wird.

Der Erfindung liegt die Aufgabe zugrunde, ein Verfahren zur Herstellung von Brennstoffen aus solar erzeugtem Wasserstoff anzugeben, das gegenüber bekannten Verfahren verbessert ist.

Diese Aufgabe wird dadurch gelöst, dass an dem Ort der solaren Erzeugung von Wasserstoff eine chemische Umwandlung des Wasserstoffs mit Kohlendioxid in ein Zwischenprodukt zur Herstellung eines Brennstoffs oder in ein Endprodukt eines Brennstoffs erfolgt. Wasserstoff kann unter anderem durch die Spaltung von Wasser in Wasserstoff und Sauerstoff oder durch die thermische Zersetzung von Kohlenwasserstoffen gewonnen werden.

Dabei liegen der Erfindung folgende Überlegungen zugrunde. Eine Möglichkeit, knapp werdende fossile Energieträger zu ersetzen, besteht darin, durch Solarenergie Wasserstoff zu erzeugen. Dies ist dort am besten möglich, wo intensive Sonneneinstrahlung vorliegt. Beispielsweise wäre für die Energieversorgung von Europa Nordafrika ein idealer Standort zur solaren Wasserstofferzeugung. Der Transport von Wasserstoff über große Entfernungen ist aber dauerhaft mit extremen technischen Problemen belastet. Weiterhin ist Wasserstoff als Brennstoff für Brennkraftmaschinen von Fahrzeugen und mobilen Arbeitsmaschinen weniger geeignet als konventionelle flüssige Treibstoffe.

Heute werden Verfahren zur Abtrennung von CO₂ aus den Abgasen der Verbrennung von Kohlenwasserstoffen oder Kohle entwickelt ("Sequestrierung von CO₂").

Dabei werden verschiedene Verfahren zur Entsorgung des so abgetrennten CO₂ vorgeschlagen, zum Beispiel die Endlagerung in porösen Gesteinen oder die Einbringung in die Weltmeere.

Einfache und sichere Transportverfahren für CO₂ (zum Beispiel für verflüssigtes CO₂ in Pipelines oder Fahrzeugen) stehen zur Verfügung oder werden entwickelt.

Ein weiterer besonders vorteilhafter weiterbildender Gedanke der Erfindung besteht darin, an einem beliebigen Ort durch eine Verbrennung entstehendes Abfall-Kohlendioxid zum Ort der solaren Wasserstofferzeugung zu transportieren und zu einer chemischen Umwandlung des solar erzeugten Wasserstoffs in leichter transportierbare Kraft- oder Brennstoffe zu verwenden.

Diese Umwandlung kann entweder direkt am Ort der Wasserstofferzeugung zu Endprodukten erfolgen, wie sie an einem wiederum beliebigen Verwendungsort benötigt werden (zum Beispiel Kraftstoffe für Verbrennungsmotoren) oder auch zu Vorprodukten oder Zwischenprodukten, die an anderer Stelle noch weiter verarbeitet werden. Beispiele von Produkten dieser Umwandlung sind Methan oder Methanol, aber auch komplexe Gemische wie Fischer-Tropsch-Produkte oder sogar Benzin, Dieselkraftstoff oder Heizöl.

Geeignete chemische Prozesse beziehungsweise Reaktionswege sind beispielsweise:

3 H₂ + CO₂ > 2 H₂ + CO + H₂O (Synthesegaserzeugung) (1)

2 H₂ + CO > ...CH₂... + H₂O (Fischer-Tropsch-Prozess) (2)

CO + 2 H₂ > CH₃OH (Methanolsynthese) (3)

CO + 3 H₂ > CH₄ + H₂O (Methansynthese) (4)

Aus dem Fischer-Tropsch-Produkt können mit üblichen petrochemischen Verfahren (thermisch und/oder katalytisch) weitere komplexe Kohlenwasserstoffgemische wie zum Beispiel Benzin erzeugt werden. Das Fischer-Tropsch-Produkt selbst ist bei entsprechender Aufarbeitung ein idealer Dieselkraftstoff. Solche Verfahren sind Stand der Technik.

Mit dem erfindungsgemäßen Verfahren lässt sich ein Kohlenstoff-Kreislauf realisieren, der den Kreisläufen bei der Erzeugung und Verbrennung von Kraftstoffen aus Pflanzen ähnlich ist, aber die Nachteile dieser Verfahren (zum Beispiel ökologische Probleme durch große Monokulturen von Energiepflanzen) vermeidet.

Ein Beispiel für einen bekannten Kreislauf ist nachfolgend wiedergegeben:
1) Bei der Verbrennung von Kraftstoffen, die aus Biomasse hergestellt werden (zum Beispiel Biodiesel), entsteht CO₂.
2) Pflanzen verwenden beim Wachstum CO₂ aus der Luft zur Synthese von Kohlenstoff enthaltenden organische Verbindungen.
3) Aus diesen Pflanzen werden wieder kohlenstoffhaltige Kraftstoffe hergestellt (zum Beispiel Biodiesel oder Ethanol oder BTL - Biomass-To-Liquid-Kraftstoff).
4) Fortsetzung des Kreislaufs bei 1).

Der erfindungsgemäße Kreislauf zeichnet sich folgendermaßen aus:
1) Bei der Verbrennung von Brennstoffen gemäß dem hier vorgeschlagenen Prozess entsteht ebenfalls CO₂.
2) Das so entstandene CO₂ wird abgetrennt, gesammelt und gespeichert.
3) Das gesammelte CO₂ wird zum Ort der solaren Wasserstoffproduktion (H₂) transportiert.
4) Aus CO₂ und H₂ werden am Ort der solaren Wasserstoffproduktion leicht transportierbare kohlenstoffhaltige Produkte (Brennstoffe oder geeignete Zwischenprodukte) hergestellt.
5) Diese Produkte werden zum Verbraucher oder Weiterverarbeiter transportiert und schließlich als Brennstoffe verwendet.
6) Fortsetzung des Kreislaufs bei 1).

Es ist auch möglich, "teiloffene" Kreisläufe zu definieren, die trotzdem zahlreiche Vorteile aufweisen.

Gemeint ist zum Beispiel die Verwendung von CO₂ aus Kohlekraftwerken, bei denen die Sequestrierung ohne einen zu großen Aufwand möglich ist. Danach erfolgt die Umsetzung mit Wasserstoff zu einem flüssigen Kraftstoff nach der beschriebenen Methode und die Verwendung dieses Kraftstoffs in Fahrzeugen oder Arbeitsmaschinen. Da die Abscheidung des CO₂ in diesen mobilen Anwendungen viel schwieriger und eventuell nicht ökonomisch sinnvoll ist, könnte man auf diese weitere CO₂-Abscheidung verzichten, hätte aber, bezogen auf die Summe beider Verbrennungsvorgänge (Kraftwerk + mobile Kraftstoffverbrennung), immerhin noch eine Halbierung der CO₂-Emission erreicht.

Für das vorgeschlagene Verfahren ist der Transport von sequestriertem CO₂ zum Ort der solaren Wasserstofferzeugung entscheidend.

Der Transport von verflüssigtem CO₂ in Pipelines oder Fahrzeugen ist möglich, hat aber gewisse Nachteile. So ist die Masse des zurückzuführenden CO₂ etwa dreimal so groß wie die des daraus hergestellten Brennstoffs. Demzufolge besteht für die Transportlogistik ein Ungleichgewicht.

Weiterhin müssen beim Transport von verflüssigtem CO₂ besondere Sicherheitsaspekte beachtet werden. So muss durch Sicherheitsvorrichtungen verhindert werden, dass verflüssigtes CO₂ aus der Transportvorrichtung austritt (Verhinderung von erdnahen "Seen" aus CO₂-Gas).

In weiterer Ausgestaltung der Erfindung ist dagegen der Transport des CO₂ in gebundener Form besonders vorteilhaft. Beispielsweise ist der Transport des CO₂ in gebundener Form als Karbonat oder auch in anderen chemischen Verbindungen mit geringerem Logistikaufwand und auch mit geringerem Sicherheitsaufwand verbunden, da die Stofftransportmassen in diesem Fall in beide Transportrichtungen angenähert gleich sind und die Möglichkeit des Austretens von CO₂ aus der Transportvorrichtung nicht existiert. Das Bindemittel würde in diesem Fall in einem direkten Kreislauf zum Ort der CO₂-Sequestrierung zurückgefördert.

## Patentansprüche

1. Verfahren zur Herstellung von Brennstoffen aus solar erzeugtem Wasserstoff, wobei die solare Erzeugung an einem Ort intensiver Sonnenstrahlung erfolgt,
**dadurch gekennzeichnet, dass** an dem Ort der solaren Erzeugung eine chemische Umwandlung des Wasserstoffs mit Kohlendioxid in ein Zwischenprodukt zur Herstellung eines Brennstoffs oder in ein Endprodukt eines Brennstoffs erfolgt.

2. Verfahren nach Anspruch 1,
**dadurch gekennzeichnet, dass** das Kohlendioxid zu dem Ort der Wasserstofferzeugung transportiert wird.

3. Verfahren nach Anspruch 1 oder Anspruch 2,
**dadurch gekennzeichnet, dass** das Kohlendioxid aus der Verbrennung von Brennstoffen gewonnen wird und aus den Abfallprodukten abgetrennt wird.

4. Verfahren nach einem der vorhergehenden Ansprüche,
**dadurch gekennzeichnet, dass** das Kohlendioxid in verflüssigter Form transportiert wird.

5. Verfahren nach einem der Ansprüche 1 bis 3,
**dadurch gekennzeichnet, dass** das Kohlendioxid in chemisch gebundener Form transportiert wird.
